(19) Europäisches Patentamt / European Patent Office / Office européen des brevets

(11) **EP 3 902 870 B1**

(12) **EUROPEAN PATENT SPECIFICATION**

(45) Date of publication and mention
of the grant of the patent:
**04.12.2024 Bulletin 2024/49**

(21) Application number: **19856510.3**

(22) Date of filing: **30.12.2019**

(51) International Patent Classification (IPC):
**C08L 1/02** *(2006.01)*

(52) Cooperative Patent Classification (CPC):
**C08L 1/02**

(86) International application number:
**PCT/IB2019/061452**

(87) International publication number:
**WO 2020/136629 (02.07.2020 Gazette 2020/27)**

(54) **BACTERIAL CELLULOSE FORMULATIONS, METHODS AND USES THEREOF**

BAKTERIELLE CELLULOSE-FORMULIERUNGEN, METHODEN UND VERWENDUNGEN

FORMULATIONS DE CELLULOSE BACTÉRIENNE, PROCÉDÉS ET UTILISATIONS DE CELLES-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2018 PT 2018115240
26.04.2019 PT 2019115471**

(43) Date of publication of application:
**03.11.2021 Bulletin 2021/44**

(73) Proprietor: **Universidade do Minho
4704-553 Braga (PT)**

(72) Inventors:
• **QUEIRÓS DOURADO, Fernando Octávio
4710-057 Braga (PT)**
• **PORTELA DA GAMA, Francisco Miguel
4710-057 Braga (PT)**

(74) Representative: **Patentree
Edifício Net
Rua de Salazares, 842
4149-002 Porto (PT)**

(56) References cited:
**WO-A1-2018/038055   US-B2- 8 053 216**

• **MAZHARI MOUSAVI S M ET AL: "Cellulose nanofiber/carboxymethyl cellulose blends as an efficient coating to improve the structure and barrier properties of paperboard", CELLULOSE, SPRINGER NETHERLANDS, NETHERLANDS, vol. 24, no. 7, 27 April 2017 (2017-04-27), pages 3001 - 3014, XP036249461, ISSN: 0969-0239, [retrieved on 20170427], DOI: 10.1007/S10570-017-1299-5**
• **NADERI ET AL: "Can redispersible low-charged nanofibrillated cellulose be produced by the addition of carboxymethyl cellulose?", NORDIC PULP AND PAPER RESEARCH JOURNAL, vol. 30, no. 04, 1 December 2015 (2015-12-01), SE, pages 568 - 577, XP055456727, ISSN: 0283-2631, DOI: 10.3183/NPPRJ-2015-30-04-p568-577**
• **NÚRIA BUTCHOSA ET AL: "Water redispersible cellulose nanofibrils adsorbed with carboxymethyl cellulose", CELLULOSE, vol. 21, no. 6, 25 September 2014 (2014-09-25), Netherlands, pages 4349 - 4358, XP055463678, ISSN: 0969-0239, DOI: 10.1007/s10570-014-0452-7**
• **MARTINS D ET AL: "A dry and fully dispersible bacterial cellulose formulation as a stabilizer for oil-in-water emulsions", CARBOHYDRATE POLYMERS, APPLIED SCIENCE PUBLISHERS, LTD. BARKING, GB, vol. 230, 22 November 2019 (2019-11-22), XP085972479, ISSN: 0144-8617, [retrieved on 20191122], DOI: 10.1016/J.CARBPOL.2019.115657**

EP 3 902 870 B1

**Description**

**Technical field**

The present disclosure relates to powdered, rehydratable, bacterial cellulose formulations comprising methods of production and uses thereof.
The powdered bacterial cellulose formulations of the present disclosure are useful in medicine, cosmetic, food, detergents, polymers and composites industries, among others.

**Background**

Bacterial cellulose (BC) is an exopolysaccharide synthesized by certain Gram-negative, obligate aerobic, acetic acid bacteria, the *Komagataeibacter* genus being the most important due to the high cellulose yield obtained. Morphologically BC is comprised of randomly assembled ribbon-shaped fibrils less than 100 nm wide and composed of aggregated bundles of elementary nanofibrils; these fibrils have a lateral size of 7-8 nm and several micrometres in length. As *Komagataeibacter* microorganisms are mandatory aerobes, under static conditions, BC is synthesized at the air/liquid interface of the culture medium [1-18].
For bulk commercial applications, dried BC formulations offer several advantages over aqueous suspensions, such as a decrease in the size and mass, thus lower storage space and transportation costs, improved storage stability, lower risk of contamination. It is known that, as with plant cellulose, the properties of BC are mostly lost upon drying. As water evaporates, the fine fibres from BC aggregates, establishing hydrogen bonds that are not easily broken upon resuspension in water [19]. Several attempts have been made to prepare dried BC formulations, some of these, addressing the restauration of the cellulose properties after aqueous dispersion, as will be reviewed below.
Document US 4960763 A [20] is related to the use of BC as a dietary fibre, to absorb/bind cholesterol (*in vitro*). BC, alone or in combination with sucrose, was either freeze-dried or frozen and cryomilled. While reasonably effective in preventing hydrogen bonding between cellulose fibres, these are rather costly solutions for industrial implementation. In this document, a comparison of the properties of BC, before and after drying, was made only in terms of the effect on cholesterol adsorption. Also, the authors recognize that, regardless of the drying method, drying BC alone strongly reduced the cholesterol adsorption properties of BC, as compared to the never-dried BC suspension. The addition of sucrose only partially mitigated such limitation.
Document US 5962676 A [21] describes a drying method for BC. High pressure homogenization and thin screw extrusion, in both cases with temperature treatment, were studied for the homogenization of BC. The BC was then dried by drum drying, spray drying, extrusion drying, oven drying and frying in oil. BC was also dried in the form of sheets and ground-milled. Regardless of the different drying method, maximum BC swelling took from 30 min to up to 18 hr. This is unpractical for industrial applications; also, this document did not establish whether the properties of the swelled BC are equivalent to those of the never-dried one.
Document JP 2873927 B2[22] proposes the addition of a third component to an aqueous BC suspension before drying, through several methods, such as oven drying, drum drying, infra-red drying. In this document, disintegration of BC was done with a kneader extruder at maximum speed, for up to 15 min, before drying. Examples of the tested third component included calcium carbonate, at 50 times the mass of BC, to obtain a dispersible product (under 30 sec, stirring with a spatula). A mixture of BC with calcium carbonate at 5 times the amount of BC and heat treated (120 °C, 20 min) after mixing in water with a spatula, results in a dispersible suspension. When glycerine was used as a third component, at a mass ratio BC:glycerine of 1:2, a dispersion could be achieved also by first heating the aqueous mixture to 100 °C, for 1 hr. Without heating, glycerine, at 50 times the amount of BC was required to allow obtaining a dispersible product. However, only when glycerine was added at 500 times the amount of BC (or 200 times if previous heating was used), nearly 80% of the initial product viscosity could be recovered. In all these cases, the stability of the dispersed products (as assessed by the precipitation degree following centrifugation) was low. BC was also mixed with carboxymethyl cellulose (CMC) and dried. A mixture composed of a mass ratio of BC:CMC of 1:5 was dispersible, with 71% of the initial product viscosity recovery and 100% stability recovery. Other polysaccharides (such as dextrin, xanthan, soluble starch) and combinations of polysaccharides and glycerin or polysaccharides and CMC, were tested as the "third" component, to be added to BC aqueous suspensions before drying. To the exception of BC:dextrin at 1:1 mass ratio, all mixtures required an excess of the third component, to allow for an almost complete viscosity and stability recovery, following aqueous dispersion. One example of that document, related to the preparation of a BC/dextrin mixture, addresses the grinding of the dried product, to a final particle size of 400 μm or less. Aqueous dispersion, at 0.2%, of the powder, with magnetic stirring, took 30 seconds, with complete recovery of the viscosity, as compared to the non-dried mixture. The dispersion time was defined as the time until large macroscopic lumps were no longer observable to the naked eye. However, no details were provided on the mass ratio of BC and dextrin, in this specific mixture. In all these cases, after stirring in water, the dried material was submitted to heat treatment at 120 °C, for 10 min. Clearly, heat treatment (a time consuming and costly solution for industrial implementation) and excess of a third component (resulting actually in a small amount of BC in the final product) are required to obtain a dispersible product.

Document US 6153413 A [24] proposes several drying methods of BC alone (i.e. without the need of adding a third component to the aqueous BC suspension), allowing the re-stauration of its properties. According to this document, during drying and dehydrating of BC fibres, tensile stress is exerted on both the crystalline and amorphous parts of the fibres. Since elasticity is higher in the crystalline parts than in the amorphous ones, a degree of strain for the tensile stress is higher in the amorphous parts. As bonds in the amorphous parts of the cellulose fibres consist of hydrogen bonds between and within cellulose molecules, the distance between the hydrogen bonds will be enlarged due to the high degree of strain, allowing water molecules to penetrate. As a result, the hydrogen bonds between the BC fibrils with the high degree of strain will be easily broken upon the addition of water and the hydrogen bonds between BC and water molecules, which existed before dehydration and drying, will be easily re-formed. In such document, the "dry" state means a state in which water is present in an amount of about 25% or less on the basis of dry BC mass. To demonstrate the dispersibility of dried BC, a BC homogenate (blended at 18.000 Rpm, for 2 min, with a blender) was dried by pouring the BC homogenate into trays and using either air drying, oven drying, infra-red drying; a BC homogenate was also freeze dried and dried under vacuum or in a drum dryer. Then, a BC aqueous suspension was prepared by further homogenization of the dried BC, using an ultraturrax (Physcotron), at maximum speed (30.000 Rpm) for 1 min. At such rotational speeds, ultraturrax exerts quite a substantial shear stress, thus most likely inducing extensive BC fibre breakdown and/or defibrillation. This is further reinforced by a noticeable decrease in the mechanical properties of dried BC sheets that were previously submitted to ultraturrax treatment, as compared to BC that was only ground with a blender (control). Further, the authors claim a good recovery of the dispersibility and viscosity of dried BC (to the exception of spray-drying), but the never-dried BC samples (controls) were only submitted to homogenization at 18.000 Rpm for 2 min, not ultraturrax. The obtained results are therefore not comparable. From the above, regardless of the drying method, a high shear force is most likely responsible for the dispersion of the BC fibres. For industrial applications, this implies added capital investment (the need for a high shear mixing equipment) and operating costs.

Documents, US 20100016575 A1 and US 8053216 B2 [25, 26], describe the addition of polysaccharide hydrocolloids as co-agents, to BC, before drying. Dispersion of the dried material could be done by high shear mixing (e.g. high pressure homogenization at 2500 psi [25] or 8000 rpm for 10 min with a Silverson mixer, 1500 psi for 2 passes with an extensional homogenizer and 2500 rpm for 10 min [26]), with or without the addition of additional co-agents. These documents propose the use of alcoholic solutions, for the co-precipitation of the BC-hydrocolloid mixture; this is followed by concentration, drying and milling. However, for large-scale implementation, very high alcohol volumes are required for the co-precipitation. As such, the use of alcohols, the inevitable product losses (from the non-precipitated material), the need for alcohol recovery equipment, all contribute significantly to the total cost of production. The use of such organic solvents also poses additional safety and environmental concerns. In these documents, the fermented broth containing BC is treated with hypochlorite, glycosidases and proteases (to lyse the cells). Hydrocolloids are mixed and then organic solvents are added. However, co-precipitation of culture media components and bacterial cell hydrolysates will also occur, thus limiting the degree of purity (hence the quality) of the final product. The use of charged hydrocolloids further aggravates the co-precipitation of unwanted substances, due to ionic interactions.

Another document, WO 2001005838 A1 [27], discloses a process for drying reticulated (crosslinked) BC without co-agents: this involves dispersing a BC suspension in an organic solvent using high shear mixing and milling, concentrating the dispersion to substantially remove the solvent, and drying. Optionally, the dried material may be ground. Exemplary organic solvents useful in this disclosure include hydrocarbons, alkyl alcohols, alkyl sulfoxides, mixtures thereof or aqueous mixtures thereof. Preferably, the cellulose material is dried using a multi-step process comprising alternating drying and grinding processes. As with the previous documents, here too, a strong limitation exists regarding the use of organic solvents. The proposed method also presents superfluous unpractical steps for use at industrial scale, namely the addition followed by removal of the organic solvent and the multi-stage drying and grinding. Also, in all examples, co-agents (one or more) such as xanthan, CMC, sucrose, were mixed with dried BC before aqueous dispersion. Further, no details on the particle size, required time and energy requirements for dispersion of the dried material (only one example of such document describes the milling of dried BC to 20 mesh size (< 850 $\mu$m)). Finally, a comparison of the properties of the BC before and after drying was not presented.

From the above, several approaches have been considered to obtain redispersible BC formulations, some of which claiming the restoration of its properties, as compared to those of the never-dried formulations. However, the redispersion methods involve the use of high energy mixing and/or high temperature and/or long dispersion times and/or the use of excess amounts of third components, still with limited results regarding the recovery of the properties of the original material. Further, these energy and time intensive processes represents high capital and operating costs, when considering industrial applications.

Most of the mentioned documents do not fully demonstrate the recovery of the BC technological properties upon redispersion, being mainly focused on demonstrating the BC's redispersibility, which does not necessarily imply the recovery of the technological properties of the never-dried material. This is also the case with document US006069136A [28], that, instead of a dried product, provides a method of producing concentrated BC having improved properties such as dispersibility, suspensibility and viscosity, encompassing the homogenization (wet grinding) and concentration of BC. As observed for the other documents, the claimed restauration of the BC properties is limited to demonstrating the redispersibility as obtained by different concentration methods, different targeted BC final concentrations and different redispersing methods. No information was provided on the particle size range of the ground material, nor on the functional properties of the redispersed one.

As will be observed in the present disclosure, the apparent (macroscopic) BC redispersion or the recovery of a viscosity similar to never dried samples (a complex and potentially misleading property when dealing with heterogeneous systems) does not fully demonstrate the restauration of its properties. The technical properties, i.e., the functional properties of BC (e.g. the stabilization of multiphasic systems), provide more detailed information.

These facts are disclosed in order to illustrate the technical problem addressed by the present disclosure.

**General description**

The invention is defined by a powdered formulation comprising bacterial cellulose and an additional component as defined in the claims 1-9, the use of powdered bacterial cellulose formulation as defined in claim 10 and a method for producing a bacterial cellulose powdered formulation as defined in claim 11.

The present disclosure relates to dried powdered and rehydratable bacterial cellulose (BC) formulations, comprising methods of production and uses thereof. In particular the use of the formulation as a colloid stabilizer, foam stabilizer, or as a thickener, as a reinforcer material (as a filler), a dietary fibre, a foodstuff, a cosmetic or pharmaceutical composition, a composite, among others.

The present disclosure concerns with the conditions by which dried powdered BC formulations, capable of being dispersed in aqueous media under 5 minutes, at room temperature, using low shear mixing, can be obtained. Such formulations preserve the technical properties of the non-dried material, in particular but not only, as a colloid stabilizer.

The present disclosure concerns with the conditions by which dried powdered BC formulations, capable of being dispersed in aqueous media under 5 minutes, at room temperature (20-25 °C), using low shear mixing (at most 1500 rpm, 1000 rpm), can be obtained. Such formulation preserves the technical properties of the non-dried material, in particular, but not only, its performance as a colloid stabilizer. More specifically, the level of grinding involved in the processing of the BC formulations must be controlled in such a way that full redispersion is possible, while not compromising the functional properties. The smaller the particle size, the better the redispersion. However, the comminution conditions required for optimal restoration of the BC technical properties may be achieved at non-optimal conditions concerning redispersion.

In an embodiment, the full restoration of the BC technical properties requires the addition of a third component but may be achieved regardless of the drying technology used or the amount of residual water in the dried formulation.

In an embodiment, the presence of a third component (or an additional component) may not always be desired, due to changes in the functional properties of native BC. However, dried BC (without the added third component) cannot be redispersed in aqueous media. Alternatively, a concentrated BC suspension can be prepared, also providing the full redispersion and restauration of the functional properties; however, the wet comminution of BC performed before the concentration step must also be controlled in such a way that the technical properties of BC are not compromised.

This disclosure encompasses the conditions by which dried BC formulations (containing preferably from 0% (w/w) to 30%(w/w) of water) can be obtained. In both cases, the BC formulations disperse quickly in aqueous media, under low shear stress, at room temperature. Once dispersed, the properties of the dried material are equivalent to those of the never dried one.

For the purpose of the present invention, BC may be produced from a bacterium. The genus of the bacterium may be *Acetobacter, Agrobacterium, Gluconacetobacter, Rhizobium, Achromobacter, Alcaligenes, Aerobacter, Azotobacter, Rhizobium, Salmonella, Escherichia* and *Sarcina.* Preferably, BC is obtained using pure strains belonging to the genus *Acetobacter* or *Komagataeibacter* (formerly *Gluconacetobacter*), as these are the most productive, but any other cellulose-producing microbial strain, natural or mutated, may be used. The aerobic fermentation of BC can be done by any know static or agitated/aerated conditions. Any known culture fermentation method such as batch, fed batch, repeated batch or continuous fermentation may be used. Several feed stocks can be used for bacterial growth and cellulose production, provided they are free of contaminants (exogenous microorganisms or toxicants). For instance, carbon sources may be individual sugars or mixtures thereof, such as glucose and fructose, disaccharides such as sucrose, and mixtures of monosaccharide and disaccharides. In addition, the carbon source can be supplied as a complex mixture of sugars such as molasses, or plant biomass hydrolysates such as wood hydrolysate, straw hydrolysate, corn stalk hydrolysate, sorghum hydrolysate or other biomass wastes. Alternative carbon sources such as ethanol, glycerol or other sugar alcohols, alone or in combination with the previously mentioned, can also be used. Also, several nitrogen sources, organic or inorganic ones, can be used, alone or combined, such as - but not limited to - ammonium sulphate, ammonium chloride, ammonium phosphate, urea, sodium nitrate, yeast extract, corn steep liquor, whey hydrolysate, peptone, casein hydrolysate. Trace amounts of organic nutrients may be further added, including amino acids, vitamins, fatty acids, nucleic acids, 2,7,9-tricarboxy-1H pyrrolo [2,3,5]-quinoline-4,5-dione, ethanol, sulphite pulp waste liquor, lignin sulfonic acid and the like. Preferentially, the effective pH range of the culture media is in the range of 4-6. Optionally, during fermentation, the pH may be controlled using buffer solutions, such as, but not limited to, citrate or 3,3-dimethylglutaric acid, or the addition of base or acid to the medium in sufficient amounts, to maintain the pH within the desired range. Preferentially, the temperature for inoculum development and fermentation is in the range of 27-32 °C. Following fermentation, bacteria and remnants from the fermentation media can be removed by a variety of protocols. These include washing with water, dilute acid and/or alkali, bleaching with sodium hypochlorite or hydrogen peroxide, lysing the bacteria with lytic enzymes such as lysozyme, treatment with surfactants such as sodium lauryl sulphate or sodium deoxycholate. Washing procedures can be done at a temperature range between room temperature and 200 °C, with any combination of the above treatments. Those skilled in the art may optionally select other fermentation and purification conditions.

In an embodiment, BC obtained by any of the means described above, at a concentration in the range between 0.5% (m/v) and 10% solids (BC) preferably between 0.5% and 5% solids, is submitted to the following sequential steps, to yield a dried powdered formulation:

- Wet comminution of BC (henceforward designated as "ground"), obtained by methods such as, but not limited to, mechanical shearing stress, wet grinding mills, crushing, cutting, trituration, aqueous counter-collision, ultrasound, high-pressure homogenization, hydrolysis with an acid or enzyme, or bleach, or combination thereof. Those skilled in the art may optionally select other methods and conditions. It was surprisingly observed that the degree of comminution plays an important role in the final properties of the concentrated or dried material obtained through further processing: a coarsely ground BC yields long fibril aggregates (bundles); too extensive comminution will yield extensive individual BC fibres and/or extensive fibre break up. Thus, an optimal particle size or optimal particle size range must be achieved as to fully preserve the BC properties.

- For the purposes of the present invention, concentration of BC can be achieved by any solid-liquid separation method such as, but not limited to, centrifugation, press filter, sedimentation and settling, screw press, roller press, juice reamers, alone or combined in a multistep process and with reverse osmosis. Those skilled in the art may optionally select other concentration methods and conditions.

- The non-concentrated ground BC is mixed by any of the existing mechanical shearing processes and equipment, with a third component as defined in the claims encompassing any hydrophilic liquid, any water-soluble substance or any water-insoluble substance or a mixture of more than one of any of these substances.

- The mixing of the ground BC and a third component can be done at a temperature range within room temperature to 80 °C, depending on the nature of the added substance. The third component can be added to ground BC in its dried form; alternatively, a stock solution can be prepared, before mixing with the ground BC. The amount of the third component to be added may be optionally determined by those skilled in the art, depending on the kind of the material and the like, being usually in the range of from 2% by weight to 1000% by weight of BC, preferably between the range of 50% to 200% by weight (or mass) of BC. Preferably, the third component is a water-soluble polysaccharide or mixtures of these substances.

- The drying of BC mixtures with a third component, by means of any of the available drying processes and equipment, which include spray drying, drum drying, oven drying, vacuum drying, tunnel drying, infra-red drying, freeze drying. Those skilled in the art may select any other proper drying process and/or combination of methods. Contrary to what was observed in previous documents, the "dry" state may be a completely dried BC formulation, in which there is no residual water. The properties of the fully dried BC formulations could be restored to those of their original wet state.

- Grinding of the dried BC formulations, which can be achieved using equipment well known by those skilled in the art, such as roll crusher, roll mill, pan mill, strainer, hammer mill, hammer crusher, pin disk, colloidal mil, disintegrator, rotary grinder, impeller attritor, jet mil. As observed with the wet comminution of BC, the particle size of the dried powdered material (henceforward defined as the ground dry BC formulation) is determinant to the restauration of its original technical properties (those of the never dried, coarsely comminuted material), with an optimal particle size or range, being necessary to achieve such restauration.

In an embodiment, both wet and dry comminution must be controlled in such a way that full redispersion is possible while not compromising the functional properties. Thus, the restoration of the BC technical properties may be achieved at non-optimal conditions concerning redispersion. Indeed, the smaller the particle size, the better the redispersion, but the same does not apply to the technical properties.

The invention as defined in the claims relates with powdered formulations comprising BC dispersible in an aqueous solution, at 20 °C using low shear mixing, and an additional (third) component selected from the following list: carboxymethyl cellulose, xanthan, methylcellulose, hydroxyethyl-cellulose, hydroxypropyl methylcellulose, tylose, or mixture thereof.

The invention as defined in the claims discloses a powdered formulation comprising

a powdered bacterial cellulose
and an additional component (or third component) selected from the following list: carboxymethyl cellulose, xanthan, methylcellulose, hydroxyethyl-cellulose, hydroxypropyl methylcellulose, tylose, or mixture thereof; wherein the powdered formulation has a particle size between 5-500 $\mu$m, methods of particle size determination as disclosed in the description; wherein the mass ratio between bacterial cellulose and the additional component varies between 1:5 to 1:0.2, preferably 1:2 to 1:0.5;
wherein the powdered formulation is dispersible in an aqueous media, at 20 °C using low shear mixing. In particular, the low shear mixing is at most 1500 rpm, preferably at most 1000 rpm

The measurement of the dispersibility of the BC powdered formulation may be carried out in various ways. In the present disclosure, samples are prepared at 0.5% (m/v) in water at room temperature (i.e. within the range of 20 °C). For this, a low mechanical shear dispersion using magnetic stirrer plate (Stuart SD162), at 900 Rpm, for up to 10 min. The dispersed materials are spread over a petri dish and observed at naked eye. Dispersibility of the formulations is classified as follows: 1-sample is homogeneous and no visible particles or aggregates are observable; 2 - sample contains some very small particles or aggregates; 3 - the sample contains some larger particles or aggregates; 4 - the water remains transparent and the well separated particles or aggregates are observed.

In an embodiment, for better results, the powdered BC formulation may be dispersed in an aqueous media in at most 10 min; preferably in at most 6 min; more preferably in at most 4 min.

In an embodiment, for better results, the powdered BC formulation is dispersed in an aqueous media in at most 2 min; preferably in at most 1 min. In particular, it may use particles of at least 100 $\mu$m.

In an embodiment, for better results, the particles may comprise a size between 80 - 400 $\mu$m, more preferably 100-300 $\mu$m. These dimensions are particularly suitable for foodstuff or for use as, more in particular beverages, dairy based beverages, in particular chocolate milk.

In an embodiment, for better results, the D50 of the particle is between 50-300 $\mu$m, preferably the D50 of the particle is between 80-300 $\mu$m, more preferably the D50 of the particle is between 100-200 $\mu$m. These dimensions are particularly suitable for foodstuff or for use as, more in particular beverages, dairy based beverages, in particular chocolate milk.

In an embodiment for better results, the powdered BC formulation is dispersed in an aqueous media in at most 2 min and wherein the particles comprise a size between 5-100 $\mu$m; more preferably 10-60 $\mu$m. These dimensions are particularly suitable for composite reinforcement.

In an embodiment, for better results, the D50 of the particle is between 10-90 $\mu$m, preferably the D50 of the particle is between 20-80 $\mu$m, more preferably the D50 of the particle is between 30-60 $\mu$m. These dimensions are particularly suitable for composite reinforcement.

The measurement of the particle size may be carried out in various ways, in this disclosure the measurement was carried out on the basis of the standard granulometry analysis by mechanical sieving. In particular concerning the sizes of the particles obtained by the sieves specified: Mat.Mesh:AISI 316 nº 1/2871/1 Nº: 1/2871/1 with an opening of 0.300 mm, Endecotts, Ltd, aperture 212 $\mu$m and Endecotts, Ltd, aperture 106 $\mu$m.

In an embodiment, for better results, wherein the mass ratio between BC and the additional component varies between 1:2 to 1:0.5.

In an embodiment, for better results, the additional component (third component) may be selected from a list consisting in: carboxymethyl cellulose, carboxymethyl cellulose and xanthan; carboxymethyl cellulose and hydroxyethyl-cellulose and carboxymethyl cellulose and hydroxypropyl methylcellulose, or mixtures thereof.

In an embodiment, the powdered BC formulation is obtained from a bacterium of the following list: Acetobacter, Agrobacterium, Gluconacetobacter, Achromobacter, Alcaligenes, Aerobacter, Azotobacter, Rhizobium, Salmonella, Escherichia, Sarcina, Komagataeibacter, or combinations thereof. Preferably Acetobacter, Komagataeibacter, Gluconacetobacter or combinations thereof.

Another aspect of the present invention relates to the use of the powdered BC formulation described in the present disclosure as a thickener. In particular, the particles may comprise a size between 5-500 $\mu$m, preferably between 80-400 $\mu$m, more preferably 100-300 $\mu$m. Preferably, the formulation may be used in foodstuff, more in particular in beverages, dairy base beverages, even more in particular chocolate milk.

Another aspect of the present invention relates to the use of the powdered BC described in the present disclosure as a reinforcer material, namely as filler. Preferably, by the use of a powdered BC formulation wherein the particles comprise a size between 5-100 $\mu$m; more preferably 10-60 $\mu$m.

Another aspect of the present disclosure relates to a pharmaceutical or a cosmetic composition comprising at least an active ingredient and the powdered BC formulation described in the present disclosure.

Another aspect of the present disclosure relates to a dietary fibre or a foodstuff comprising an effective amount of powdered BC formulation.

Another aspect of the present disclosure relates to a composite comprising an effective amount of powdered BC formulation.

Method for producing a BC formulation of dried powder comprising the following steps of:

  providing a suspension of BC bundles in water, with a size between 20 $\mu$m to 2 mm, preferably 100 $\mu$m to 1.5 mm, more preferably 200 $\mu$m to 1 mm;
  adding an additional component at a temperature between 20-80 °C, wherein the additional component is selected from carboxymethyl cellulose, xanthan, methylcellulose, hydroxyethyl-cellulose, hydroxypropyl methylcellulose, tylose, or mixtures thereof;
  drying the BC formulation until obtaining at least 60% of solids;
  grinding the BC formulation until obtain a particle size between 5-500 $\mu$m; wherein the mass ratio between bacterial cellulose and the additional component varies between 1:5 to 1:0.2, preferably 1:2 to 1:0.5.

In an embodiment, the step of providing a suspension of BC bundles (i) comprises wet comminution.

In an embodiment, the BC powdered formulation comprises a size between 100-300 $\mu$m.

In an embodiment, the concentration of BC in the ground BC suspension varies between 0.3 - 10 % (wt./v).

In an embodiment, the concentration of BC in the ground BC suspension varies between 0.5-5 % (wt./v).

In an embodiment, the additional (third) component may be selected from a list consisting of: xanthan gum, carboxymethyl cellulose, methylcellulose, hydroxypropylcellulose, ethylcellulose, tylose, or mixture thereof.

Another aspect of the present invention, relates to a method for producing a BC powdered formulation described in the present disclosure comprising the following steps of:

  providing an aqueous suspension of ground BC bundles, with a size between 20 $\mu$m to 2 mm, preferably 100 $\mu$m to 1.5 mm, more preferably 200 $\mu$m to 1 mm;
  adding an additional (third) component at a temperature between 20-80 °C, wherein the additional component is defined in the claims;
  drying the BC formulation until obtaining at least 60% of solids;
  grinding the BC formulation until obtaining a particle size between 5-500 $\mu$m, wherein the mass ratio between bacterial cellulose and the additional component varies between 1:5 to 1:0.2, preferably 1:2 to 1:0.5.

In an embodiment, the concentration of BC in the ground BC suspension may vary between 0.3-10 % (wt./v). Preferably the concentration of BC in the ground bacterial cellulose suspension varies between 0.5-5 % (wt./v).

In an embodiment, the step of homogenizing the BC suspension may comprise wet comminution.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

**Brief Description of the Drawings**

The following figures provide preferred embodiments for illustrating the description and should not be seen as limiting the scope of invention.

  Figure 1 - Petri dish photographs of bacterial cellulose aqueous suspension, following homogenization with A) Sammic blender, B) Comitrol Processor (2 passages), High Pressure Homogenizer, after C1) 1 passage, C2) 2 passages and C3) 6 passages. White bar scale: 1 mm.

Figure 2 - Fluorescence photomicrographs of bacterial cellulose aqueous suspension, following homogenization with A) Sammic blender, B) Comitrol Processor (2 passages), High Pressure Homogenizer, after C1) 1 passage C2) 2 passages and C3) 6 passages. BC was stained with Calcofluor white and observed in an Olympus BX51 microscope. Scale: 100 $\mu$m.

Figure 3 - Effect of the addition of bacterial cellulose, plant nanocellulose and hydrocolloids on the overrun of whipped egg whites.

Figure 4 - Petri dish photographs of bacterial cellulose aqueous suspensions, following homogenization with Sammic blender, Comitrol Processor (6 passages) and High Pressure Homogenizer. Samples were concentrated to 20% solids and diluted and redispersed in water. White bar scale: 1 mm.

Figure 5 - Fluorescence photomicrographs of bacterial cellulose aqueous suspensions following homogenization, concentration to 20% solids and dispersion dilution in water. BC was stained with Calcofluor white and observed in an Olympus BX51 microscope. Scale: 100 $\mu$m.

Figure 6 - Stability of whipped egg whites over time, as prepared by the addition of bacterial cellulose ground with Sammic blender (at 0.1, 0.2 and 0.3%), xanthan or Bioplus (embodiment outside the subject-matter of the claims but useful for understanding the disclosure).

Figure 7 - Classification of the dispersibility of never-dried mixtures of BC and third components. 1 - sample is homogeneous and well dispersed; 2 - sample contains some very small BC aggregates; 3 - sample contains some larger BC aggregates

Figure 8 - Fluorescence photomicrographs of never-dried BC:CMC aqueous suspension, following homogenization in a A) Sammic blender, B) Comitrol Processor (2 passages) and High Pressure Homogenizer, after E) 6 passages. Following mixing, BC:CMC was dispersed with either I) magnetic stirrer or II) ultraturrax. Samples were stained with Calcofluor white and observed in an Olympus BX51 microscope. Scale: 50 $\mu$m.

Figure 9 - Rheological profile of 0.5% (m/v) BC:CMC samples diluted and dispersed using I) ultraturrax and II) magnetic stirrer.

Figure 10 - Rheological profile of 0.5% (m/v) BC:CMC samples diluted and dispersed using I) ultraturrax treatment and II) magnetic stirring.

Figure 11 - Rheological profile of 0.5% (m/v) BC:CMC samples ground at different particle sizes.

Figure 12 - Examples of % stability.

## Detailed description of the invention

The present disclosure is also further described, in particular, using embodiments of the disclosure. Therefore, the disclosure is not limited to the descriptions and illustrations provided. These are used so that the disclosure is sufficiently detailed and comprehensive. Moreover, the intention of the drawings is for illustrative purposes and not for the purpose of limitation.

The present disclosure relates to powdered, methods of production and uses thereof.

The powdered BC formulation of the present disclosure is useful for use in medicine, food, cosmetic, among others.

The present disclosure concerns with the conditions by which a dried powdered BC formulation, capable of being dispersed in aqueous media under 5 minutes, at room temperature, using low shear mixing, can be obtained. Such formulation preserves the technical properties of the non-dried material, in particular but not only, the potential as a colloid stabilizer.

For clarification purposes, the description of the present disclosure is divided into the following sequential steps:

1. Wet comminution of BC (production of "ground" BC);

2. Mixing of the ground BC with a third component;

3. Drying of BC formulations;

4. Grinding of BC formulations;

5. Alternatively to the steps 2-4, ground BC may be concentrated without being mixed with a third component (outside the subject-matter of the claims but useful for understanding the disclosure).

Example 1- Wet grinding of bacterial cellulose

In an embodiment, a BC obtained by any means as described in the previous section, in an amount of the range between 0.5% (m/v) and 10% solids (BC) preferably between 0.5% and 5% solids, preferably in the range of 0.7-1% (w/v) was wet ground by three different methods:

A) Using a Sammic fixed speed blender, model TR250 at 9000 Rpm (Samic, S.L.) until a homogeneous pulp was obtained, as observed by visual inspection;
B) By submitting BC to 2 passages through a Comitrol® Processor, Model 1700 (Urschel Laboratories Inc.). In each passage, grinding of BC was done at 900 Rpm, using a labyrinth verycut impeller and a cutting head 160 at 5° inclination;
C) By High Pressure Homogenization (HPH) using a GEA Niro Soavi, model Panther NS3006L, at 600 Bar. Homogenized BC was collected after 1 passage (HPH 1 Pass), 2 passages (HPH 2 Pass) and 6 passages (HPH 6 Pass), through the High-Pressure Homogenizer. Before HPH processing, BC suspensions were first ground described in method A, to facilitate feeding of the suspension to the homogenizer.

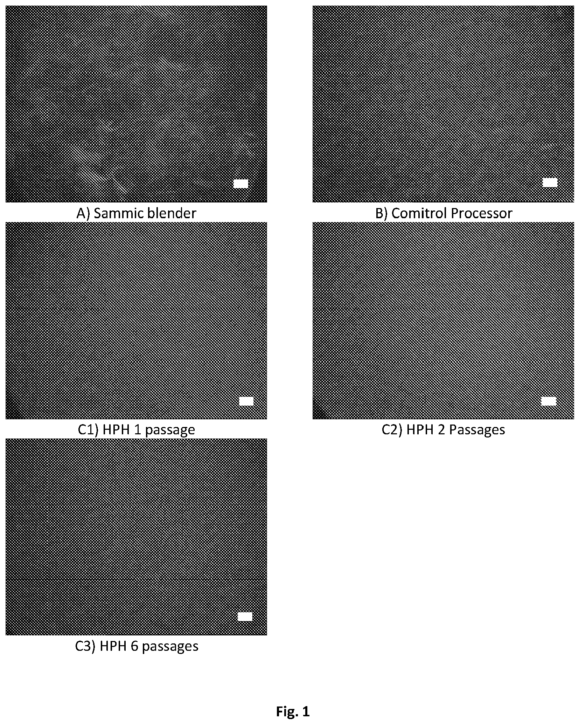

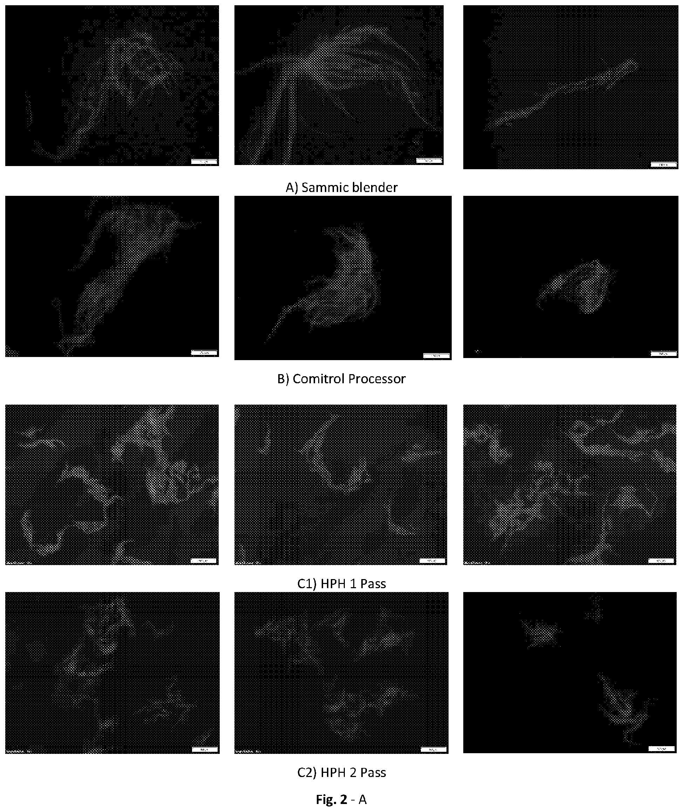

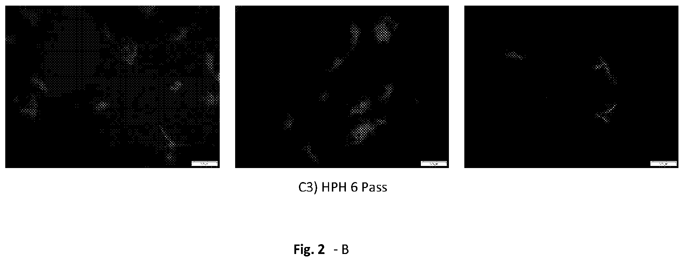

BC suspensions were spread over petri dishes and observed with a SZ40 Zoom Stereo Microscope (Olympus). Photographs were taken with a camera SONY AVC-D5CE and adapter CMA-D5CE, at a magnification from 0.67x to 5x (Figure 1). BC suspensions were also stained with Calcofluor white and observed in an Olympus BX51 microscope.
Well-dispersed suspensions are a prerequisite in many industrial applications. BC suspensions are known to exhibit pronounced aggregation in aqueous media, due to strong interfibrillar hydrogen bonds and Van der Waals attraction, an effect that is concentration dependent. These attractive interactions, in combination with the long aspect ratio of the fibres, cause the formation of extended networks when BC is dispersed in water. A ball of threads is obtained irrespective of whether BC is produced in a stirred tank or by static fermentation and then wet grinded. These highly heterogeneous dispersions consist of fibre bundles, flocs, and voids spanning tens to hundreds of micrometres depending on concentration and shear homogenization conditions (Figure 1 and Figure 2). In this example, three BC homogenization methods were used, with increasingly shear stress, from a blade blender (A), to high pressure homogenizer (C).
It was observed that with the increase in the shearing stress (from A to C), an increase in the BC defibrillation/fragmentation occurred. Homogenization of BC with Sammic blender showed larger fibre aggregates and BC fragments within 200 $\mu$m to 1-1.5 mm size. BC homogenized with Comitrol Processor and HPH, lower amounts of millimetric fragments were observed, with most of them being in the range of 200-600 $\mu$m (Comitrol), 100-200 $\mu$m (HPH 1 pass) and 20-100 $\mu$m (HPH 6 pass).
Increasing the number of passes by HPH resulted in the appearance of shorter fibres alongside with their increased separation. Due to their attractive forces and crosslinking, despite extensive deagglomeration, BC fibres always appear to be interconnected to neighbouring fibres, creating a 3D network of very fine fibres and other void areas containing only water. This effect occurred even at low BC concentrations (as low as 0.5%(w/v)) so that stable dispersions of well spread single fibres was never achieved.

Example 2 - Effect of bacterial cellulose on the overrun and foam stabilization of whipped egg whites

Many food products are emulsions, foams or whipped emulsions (e.g. milk, cream, ice cream, butter, mayonnaise, finely minced meat like sausage meat, whipped egg white, whipped cream bread, etc). Foam and emulsion properties are strongly influenced by the interfacial properties of the emulsifier in the system. Polysaccharides (e.g. modified starches) and proteins, often play an important role in the formation and stabilization of these colloidal systems. These macromolecules provide the interface with physicochemical and rheological properties (steric hindrance, electrostatic repulsion, viscoelasticity), which determines the resistance to droplet coalescence. During the beating of egg whites, proteins adsorb on the newly-formed interface, denature and form a "gel" network that traps air bubbles and whose rheological properties govern the stability of the foam.
These non-dairy aerated products pose special concerns and constraints because the bubble wall is thin, relatively weak and unsupported (in contrast to oil droplets, which are supported by the mass of the oil). In these systems, two requirements exist. The first, a physical stabilization of the liquid within the interstitial regions of the foam. The second, a strengthening of the foam walls, accomplished using gums and other ingredients in the mix. Microcrystalline cellulose (MCC) and its derivatives, hydroxypropyl cellulose (HPC), hydroxypropyl methylcellulose (HPMC), methyl etylcellulose (MEC) and other polysaccharide gums, such as xanthan have been used for the stabilization of foams.

In this embodiment, outside the subject-matter of the claims but useful for understanding the disclosure, the effect of BC on the overrun and foam stabilization of whipped egg whites was evaluated. For this, BC from different sources (from *K. xylinus* strain ATCC 700178 and "nata de coco" from HTK Food CO. Ltd. (Vietnam), ground with a Sammic blender as described in Example 1, were used (code samples: 700178, S; Nata de coco, S. BC from ATCC 700178 was further homogenized with Comitrol and High Pressure Homogenization (Example 1) (code samples: BC Comitrol, BC HPH 1 Pass, BC HPH 6 Pass).

To compare the performance of BC against other hydrocolloids and plant nanocelluloses, several other samples were used in parallel: CelluForce NCC, Arbocel B 600, Arbocel BE 600/30 (from Celluforce Inc.) and Bioplus (from American Process Inc.) as sources of plant nanocellulose; xanthan, carboxymethyl cellulose, carrageenan (from Sigma) as examples of hydrocolloids.

As previously mentioned, BC suspensions are known to exhibit pronounced aggregation in aqueous media, due to strong interfibrillar hydrogen bonds and Van der Waals attraction, an effect that is more pronounced as the concentration of BC in aqueous media increases. To evaluate if concentrating BC affects the fibres dispersibility and functional properties, all BC samples were concentrated to 20%(wt/v) solids (code samples: 700178, S-P and Nata de coco, S-P), diluted and redispersped in water, under magnetic stirring at 900 Rpm for 2hr. According to the present embodiment, the BC concentrate may be prepared by dehydration with any known means such as a filter press, belt-press, centrifugation, vacuum filtration or any other method know to those of ordinary skill in the art.

Dried egg whites (12%, wt/v) were dispersed in water and whipped (using a Silvercrest kitchen blender). During whipping, each BC aqueous suspension or any other plant cellulose or hydrocolloid sample, was added to a final concentration of 0.1-0.3% (wt/v). A control was also done using only dried egg whites. The whipped cream's overrun was determined by measuring the volume increase of the whipped cream, relative to the control.

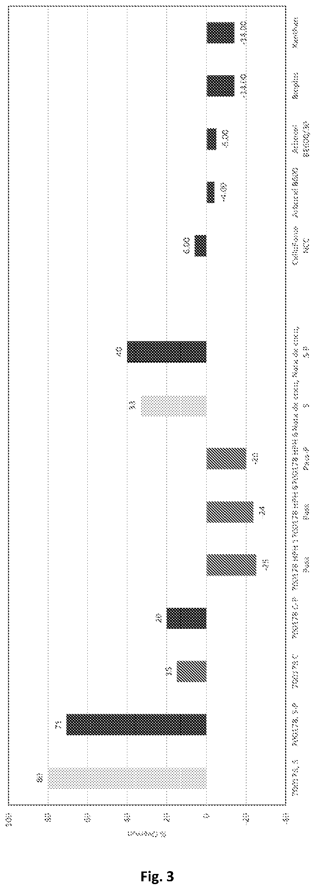

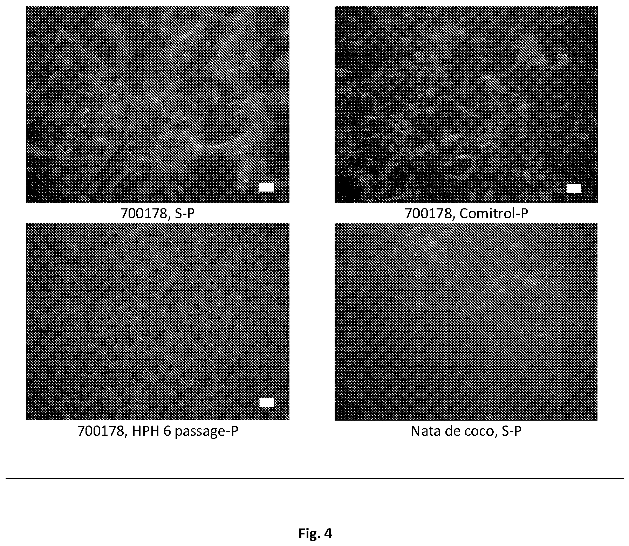

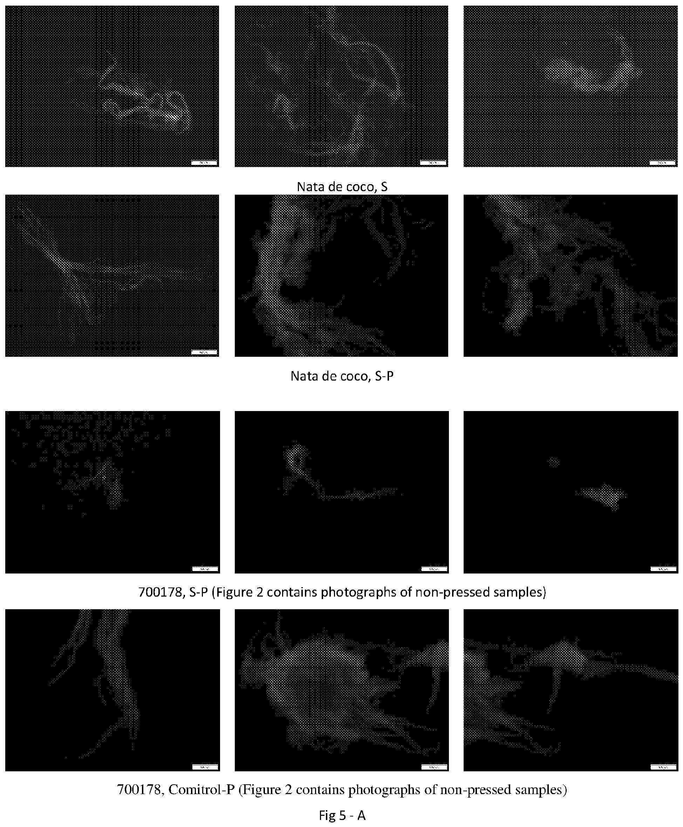

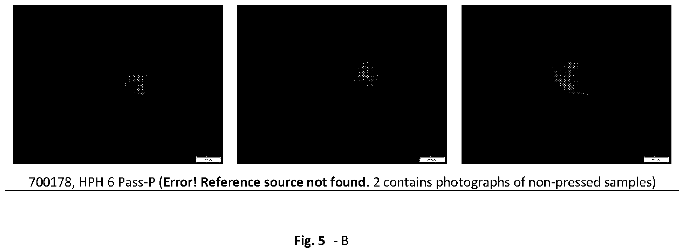

As observed in Figure 3, at 0.3%(wt/v) addition to the mixture, all BC samples ground with Sammic blender (700178, S and Nata de coco, S) showed a remarkable increase in the whipped cream's overrun. Contrarily, to the exception of Celluforce, with a marginal increase of 6% over the control, all plant nanocelluloses and hydrocolloids decreased the whipped cream's overrun. Increasing the extent of the homogenization of BC (HPH), which, as observed, decreases the size of the BC aggregates, decreases the capability of BC to stabilize the air/liquid interface, thus decreasing the cream's overrun. Finally, following compression of BC to 20%(wt/v) solids, low shear dispersion does not allow the full lengthening of the BC fibre aggregates (Figure 5) when diluted and redispersed in water; however, provided the BC aggregates size is unaffected, compressing BC (Figure 4) does not affect the capacity to stabilize the foam.

These results clearly demonstrate the influence of the BC's particle size, as obtained by wet grinding, on the stabilization of protein foam.

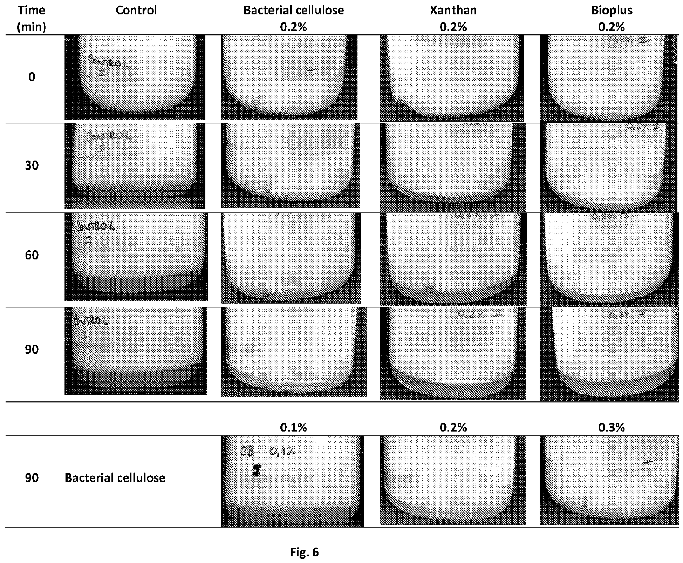

Also, the stability of the foam was registered over time, at room temperature by evaluating, qualitatively, the accumulation liquid at the bottom of the flasks (Figure 6). Regardless of pressing or not the BC, results also showed that BC ground with the Sammic blender, at 0.3%(wt/v) in the final mixture, results best in the stabilization of whipped egg whites (as no liquid accumulation was observed) as compared to the control, showing better performance than the other materials tested.

Example 3 - Mixing bacterial cellulose with a third component

In an embodiment, the BC obtained by any of the three different comminution methods described in Example 1 was mixed with either sodium carboxymethyl cellulose, CMC (90 KDa, or 250 KDa or 700 KDa, Sigma), xanthan (Sigma), methylcellulose, MC (Sigma), hydroxyethyl-cellulose, HEC (Sigma), hydroxypropyl methyl cellulose (Sigma), HPMC (Sigma), tylose (Sigma), glycerol (Sigma) and saccharose (Sigma); BC was also mixed with combinations of CMC:Xanthan, CMC:HEC and CMC:HPMC, as described in the following table:

Table 1- Combination of bacterial cellulose and third components

| Mixture | Mass ratio |
| --- | --- |
| | 1:1 |
| BC:CMC | 1:0.75 |
| | 1:0.25 |

(continued)

| Mixture | Mass ratio |
|---|---|
| BC:Xanthan | |
| BC:MC | |
| BC:HEC | 1:1 |
| BC:HPMC | |
| BC:Tylose | |
| BC:Saccharose | |
| BC:Glycerol | 1:1.6<br>1:1.3 |
| BC:CMC:Xanthan | 1:0.25:0.75 |
| CB:CMCHEC | 1:0.5:0.5 |
| CB:CMC:HPMC | 1:0.75:0.25 |

In all of these cases, the components to be added to BC were first dissolved in water. Those of ordinary skill in the art can appropriately select the addition amount of the third components, as a redispersing aid, according to the type of substance and the like, usually within 2 to 1,000%(wt/v) by mass of BC.

To evaluate the dispersibility of the BC mixtures, samples were prepared at 0.5% (wt/v) in water to at room temperature. For this, two dispersion method were used:

> I) a high shear dispersion mixing, using an ultraturrax CAT Unidrive 1000D, at 15000 Rpm using a dispersing shaft CAT 20F, also for 5 min and

> II) a low mechanical shear dispersion using magnetic stirrer plate (Stuart SD162), at 900 Rpm, for 5 min

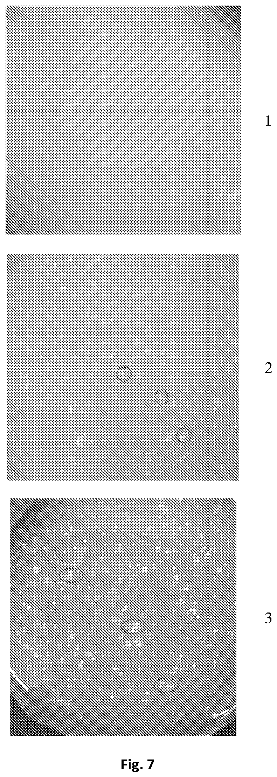

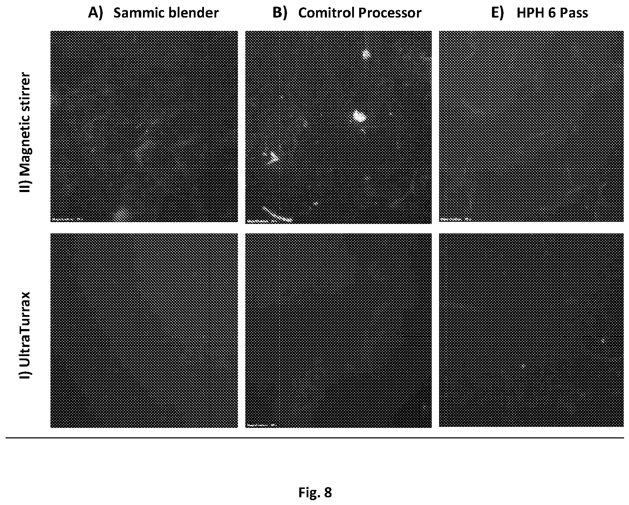

As a control, BC, as obtained by any of methods A, Band C mentioned above (Example 1), was used at the same final solids concentration. The dispersed materials were spread over a petri dish and observed at naked eye. Also, fluorescent microscopy was used to better visualize the BC fibres. As an example, the following table, Figure 7 and Figure 8 summarize the main observations pertaining to the BC and CMC mixtures.

Table 2 - Dispersibility of never-dried mixtures of BC and third components.

| Component<br>BC:CMC 90 KDa (1:1): | | Dispersion | Dispersibility Classification* |
|---|---|---|---|
| A) Sammic blender | | I) UltraTurrax | 1 |
| B) Comitrol Processor | | II) Magnetic stirrer | 2 |
| HPH | C) 1, 2, 6 Pass | I) UltraTurrax | 1 |
| | | II) Magnetic stirrer | 2 |
| **BC:CMC HPMC**<br>A) Sammic | 1:0.5:0.5 | | |
| **BC:CMC:HEC**<br>A) Sammic | 1:0.75:0.25 | I) UltraTurrax | 2 |
| **BC:Xanthan**<br>B) Comitrol | 1:1 | | |
| * According to embodiments of paragraphs [0027] and [0060] | | | |

While samples dispersed using an UT showed complete dispersibility (minimum amount of fibre bundles were observed), samples dispersed using a magnetic stirrer still showed fibre bundles and agglomerates (Figure 8 and Table 2). However, the presence of the third component improves the dispersion of the aggregates, more homogeneous samples being observed (Figure 8 vs Figure 2). Also, further homogenization with ultraturrax for up to 60 min, does not change the morphology nor the rheological profile of the BC:CMC mixtures (data not shown).

It was observed that when CMC or xanthan were added to BC, at preferably a mass ratio of 1:1, a dispersible and stable suspension was obtained, following high shear treatment with ultraturrax. Regarding the control, BC alone, it could not be dispersed by any of the dispersion methods.

From these results, the water-soluble anionic polyelectrolyte CMC plays a determinant role in ensuring the dispersibility of the BC fibres and allowing their stabilization in aqueous media. The negative charge of CMC may contribute to the improved dispersion of the BC fibres due to steric hindrance. Also, CMC has a strong affinity for water molecules. Non-adsorbed CMC may also prevent the agglomeration of BC fibres due to the creation of a hydration shell in aqueous media, around CMC and BC thus also contributing to the improved dispersibility and stability in aqueous media.

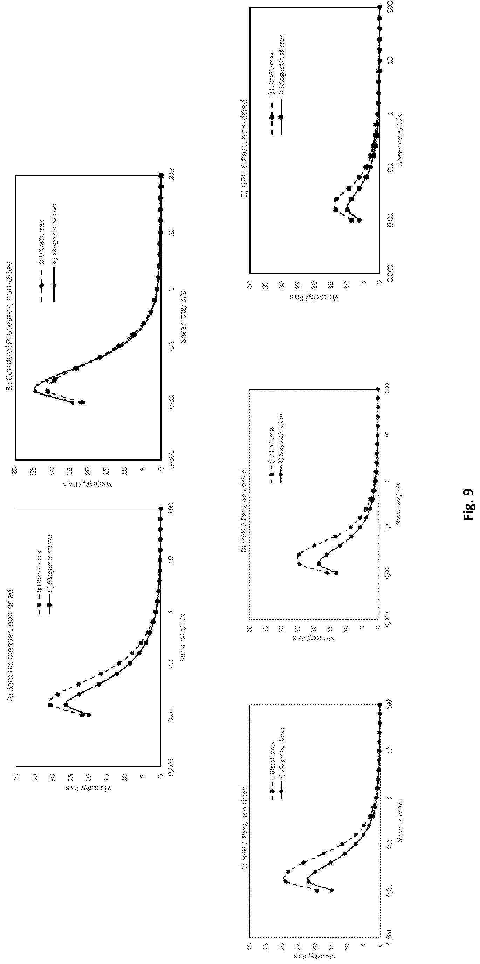

The BC:CMC samples were further characterized by rheological assays (Figure 9). For this, stress-strain curves were obtained using a TA instruments rheometer, model 5332-1179 and a disk geometry. Shear rate versus viscosity graphs were drawn in semi-log scale to better visualise the different rheological profiles at low shear rates. From these assays, it may be concluded that the use of higher shear rate stress during wet comminution decreases the dynamic viscosity of the samples (from A to E, Figure 9). As previously mentioned, this effect is caused by some fragmentation of the fibres with increasing shear stress. Also, to the exception of samples ground with B) Comitrol, which show a coincidental rheological profile, all other samples showed higher rheological profile after dispersion with I) ultraturrax, which suggests that the high shear rates used by ultraturrax, exerted a better dispersion of the BC fibres, without compromising its viscosity - actually improving it.

Example 4 - Drying of bacterial cellulose mixtures

In an embodiment, the BC was wet ground by three different methods, as described in Example 1 (methods A, B and C). The obtained BC was mixed with a third component, as described in Example 3. The obtained BC mixtures can be dried by means of any of the available drying processes and equipment, which include spray drying, drum drying, oven drying, vacuum drying, tunnel drying, infra-red drying, freeze drying. Those skilled in the art may select any other proper drying process and/or combination of methods. In the present disclosure, BC mixtures were dried by four methods:

i) Drying on a hot plate, a fast drying process (within minutes), whereby a thin layer of BC samples was spread over a hot plate (130 °C) of an Ariette Crepes Maker, model 183 and dried; the "dry" state is an absolute dried BC product (100% TS (total solids)), in which there is no residual water in the final product.

ii) Drying in an oven, a slower drying process, in the range of 4-6hr. For this, samples were placed in aluminium crucibles and dried at 80 °C. To evaluate the effect of residual moisture on the dispersibility of BC formulations wet ground with Comitrol Processor, drying was done to a final solid content of a) 80% (m/m) (80% TS) and b) 100% (m/m) (100% TS).

iii) Drum drying, also a fast drying process, was also used. For this, samples were fed to a lab-scale chrome plated cast iron double drum dryer, from Tummer Simon Dryers (drum size 0.3m x 0.3m giving a drying surface area of 0.28 $m^2$ per roll (0.56 $m^2$ total). Feed was hand fed ('jugged') into the nip at room temperature, at a rate was 11.9Kg/hr. The nip gap was set at 0.1 mm. Drying was done at 2-4 bar steam pressure at a roll speed of 2.5 Rpm. Thin product sheets were obtained at a rate of 0.86 Kg/hr at around 20% residual moisture.

iv) Samples were also dried by spray drying. For this, a sample at 1% (m/v) was fed to a MOBILE MINOR™ R&D Spray Dryer (GEA Group AG) at a flow rate of 240 Kg/h. The inlet and outlet temperatures were set to 220 and 115°C, respectively and a pressure gas nozzle of 3.5 bar was used. In this case, samples were dried to 100%TS.

All dried material was ground (with a High Power Herb Grain Grinder Cereal Mill Powder Grinding Machine Flour 600G) and sieved (Mat.Mesh:AISI 316 nº 1/2871/1 Nº: 1/2871/1 with an opening of 0.300 mm) to a final particle size preferably in the range of <300 μm. As in the previous examples, the dried powders were dispersed at a final solids concentration of 0.5% in water, using:

I) a high shear dispersion mixing, using an ultraturrax CAT Unidrive 1000D, at 15000 Rpm using a dispersing shaft CAT 20F, for 5 min and

II) a low mechanical shear dispersion using magnetic stirrer plate (Stuart SD162), at 900 Rom, also for 5 min.

Rheological assays were done using a TA instruments rheometer, model 5332-1179 and a disk geometry. Shear rate versus viscosity graphs were drawn in semi-log scale to better visualise the different rheological profiles at low shear rates.

The following table summarizes the main observations regarding the aqueous dispersibility of the dried and ground BC:CMC 90 KDa mixture.

Table 3 - Dispersibility of BC:CMC mixtures after drying and grinding to a particle size of <300 $\mu$m.

| Homogenization | Drying | Dispersion | Dispersibility Classification* |
|---|---|---|---|
| A) Sammic blender | i) Hot plate | I) UltraTurrax | 1 |
| | ii) Oven dried | | |
| B)Comitrol Processor | i) Hot plate | II) Magnetic stirrer | 2 |
| | ii) Oven 80% TS dried 100% TS | | |
| HPH | | | |
| 1, 2 and 6 Pass | i) Hot plate | I) UltraTurrax | 1 |
| | | II) Magnetic stirrer | 2 |
| * According to embodiments of paragraphs [0027] and [0060] | | | |

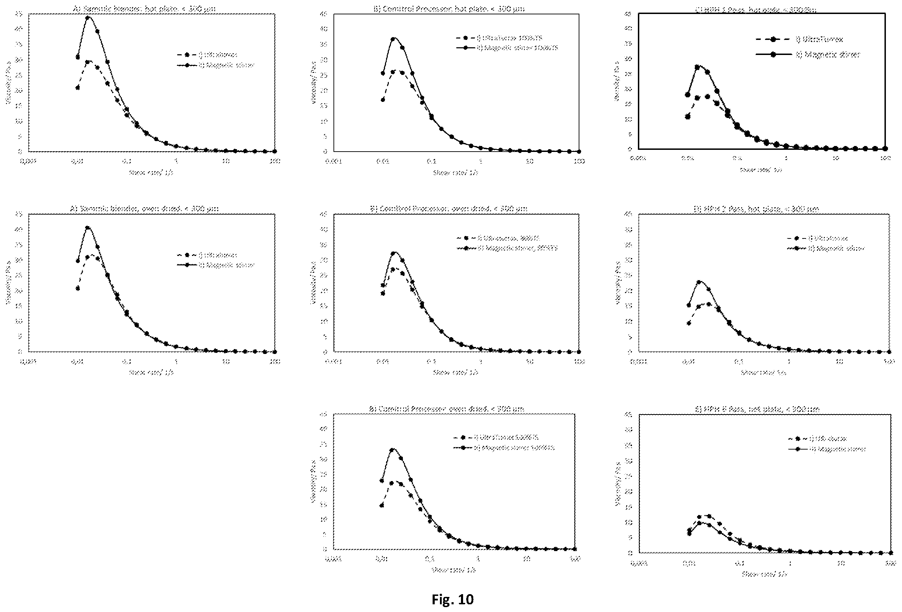

As was observed for Figure 8, water dispersion of dried and ground samples under low shear (magnetic stirring) showed a few fibre blundes, whereas with a high shear rate (ultraturrax), the BC was completely dispersed. The highest viscosity profile of BC:CMC was obtained from BC ground with a A) Sammic blender and dried on a hot plate to 100%TS (Figure 10). The rheological profile was actually higher (higher dynamic viscosity) than the one of non-dried sample. As for the remaining samples, all of the ones dispersed with low shear stress (II - magnetic stirrer) showed a similar rheological profile to those of the never-dried ones. These results suggest that the use of low shear stress dispersion mixing, at room temperature, under 5 minutes is enough to allow for a recovery or even slight increase in the rheological profile of BC:CMC dried formulation. However, the presence of small aggregates of BC in the suspension may contribute to the increase in the apparent viscosity profile. Contrarily to the never-dried samples, dispersion of the dried ones with ultraturrax reduced the rheological profile (as compared to the samples dispersed in the magnetic stirrer), possibly due the reduction of some fibre bundles and agglomerates. Further homogenization for up to 60 min with ultraturrax does not change the rheologic profile of the samples (data not show).

Contrarily to what has been proposed in other documents, when a dispersing aid is added to BC, such as CMC, drying can be done to the extent of the full removal of water molecules, as dried samples with 80 and 100%TS, showed an identical rheological profile (Figure 10B). A similar observation was recorded for samples dried using a drum dryer (80 and 100%TS) and spray dryer (100%TS).

Too extensive wet comminution of the BC suspension such as with HPH (Figure 10 C, D, E) strongly affected the rheological properties of the dried material, confirming the effect previously observed on the never dried samples.

A dry control without the addition of CMC was also prepared. Results showed that BC alone is not dispersible, regardless of the homogenization, drying and dispersion method used.

Example 5 - Effect of the particle size on the dispersibility and rheological profile of bacterial cellulose mixtures

In the previous example, the dried BC formulations were ground to a particle size <300 $\mu$m. It is important, however, to better understand the effect of the particle size in the restauration of the properties of BC mixtures. For this, the BC mixtures obtained in the previous example were further ground and sieved to a final particle size <200 $\mu$m (Endecotts, Ltd, aperture 212 $\mu$m) and <100 $\mu$m (Endecotts, Ltd, aperture 106 $\mu$m). Also, samples were fractioned into the following size ranges: 100<x<300 $\mu$m, 300<x<500 $\mu$m. As in the previous examples, the dried powders were dispersed to a final solids' concentration of 0.5% in water, evaluated by spreading over a petri dish, fluorescent microscopy and through rheological profile.

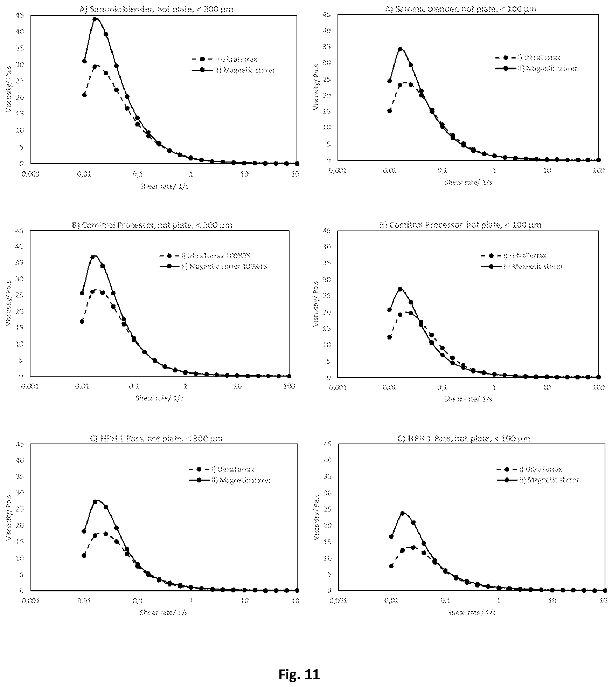

As an example, table 4 and Figure 11 summarize the main observations pertaining to the dispersibility and rheological behaviour of BC:CMC 90 KDa. To simplify the demonstration of the results, only those obtained using hot plate drying are shown. The same profile was observed for samples dried in an oven.

Table 4 - Dispersibility of BC:CMC mixtures after drying (in a hot plate) and grinding.

| Homogenizatio n | Particle size | Dispersion | Dispersibility (Classification)* |
|---|---|---|---|
| A) Sammic blender | < 100 $\mu$m | I) UltraTurrax II) Magnetic stirrer | 1 |
| B)Comitrol Processor | < 100 $\mu$m | | |
| | < 200 $\mu$m | | |
| HPH | | | |
| C) 1 Pass D) 2 Pass E) 6 Pass | < 100 $\mu$m | | |
| A) Sammic blender | 100<x<300 $\mu$m | II) Magnetic stirrer** | 2 |
| | 300<x<500 $\mu$m | | 3 |

* According to embodiments of paragraphs [0027] and [0060]
** Stirring for 30 min

Results show that, decreasing the particle size of the BC:CMC allows for a faster dispersion of BC mixtures (under 1 min in the case of particles ground to < 100 $\mu$m) at low shear rates (magnetic stirring). Increasing the particle size (from e.g. <100 $\mu$m, to 300<x<500 $\mu$m), decreases the capability of fully dispersion under low shear mixing conditions, even after mixing for 30 min. However, with the decrease in particle size, a decrease in the viscosity profile was also observed (Figure 11). In addition, as examples below will show, this impacts the technological performance of BC mixtures.

Example 6 -Effect of particle size of dried BC formulations on the Suspension Stability of Cocoa Beverage

In an embodiment, the suspension stability of water-insoluble solid particles such as cocoa, powdered green tea, and calcium carbonate are important aspects for the development of certain commercial beverages. In the case of chocolate milk, cocoa particles tend to precipitate soon after the initial mixing.

In this example, the effect of particle size of dried formulations of BC:CMC 90 KDa, obtained as described in Example 5, on the stabilization of cocoa particles suspensions in a chocolate milk beverage was evaluated. For this, BC:CMC at different particle sizes and final concentrations in the range of 0.075-0.15% and pure cocoa (1.2%) were weighted. Medium-skimmed milk, 15 mL, was added to each BC:CMC concentration. The mixture was stirred in a vortex (2,800 rpm) for 3 min at room temperature and then pasteurized at 75 °C for 15 seconds. Samples were stored at room temperature and the sedimentation of cocoa was evaluated. Further, the effect of ultraturrax on the functional properties of the BC:CMC samples was assessed. For this, BC samples were homogenized with ultraturrax (CAT Unidrive 1000D, at 15000 Rpm using a dispersing shaft CAT 20F) for 4 and 30 min before being added to the milk. In parallel, the same test was done using xanthan, carboxymethyl cellulose, colloidal plant celluloses: Avicel (RT 1133, LM 310 and CM 2159, FMC Biopolymers), Novagel (RCN-10 and RCN-15, FMC Biopolymers), Bioplus Fibrils (a microfibrillated cellulose, not used in food applications, American Process Inc.) and plant nanocelluloses: CelluForce NCC, Arbocel B 600, Arbocel BE 600/30 (from Celluforce Inc.). All Avicel and Novagel celluloses were previously activated, for 30 min, at 23,800 Rpm, according to the specifications sheets. A control assay, where no stabilizers were added, was also made. Also controls with never-dried BC (ground using methods A, B, C and D described in Example 1) to which CMC was added to, were done. In this case, CMC was mixed with BC using I) a low shear dispersion mixing, as described in Example 3. The stabilization of the chocolate drinks was assessed by calculating the percentage of sedimentation, according to the following equation:

$$Stability\ (\%) = (Milk\ with\ chocolate\ mL \times 100)/(total\ milk\ volume) \qquad (1)$$

The higher the stability (%), the more stabilized the suspension is.

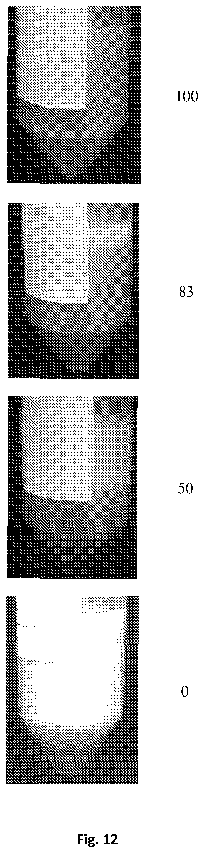

The results from this study are displayed in the following table and Figure 12, using 0.15% BC:CMC (other concentrations were tested with similar observations).

Table 5 - Stabilization of cocoa particles in chocolate milk, with BC:CMC (redispersed under low shear rate unless otherwise specified), added at 0.15%, at room temperature.

| Homogenization | Drying | Particle size µm | Stability/% 1h | 24h | 4days |
|---|---|---|---|---|---|
| A) Sammic blender | i) Hot plate | <100 | 100 | 100 | 83 |
| | | <300 | 100 | 100 | 100 |
| | Never dried | | 100 | 100 | 100 |
| | Never dried (UT) | 4 min | 100 | 100 | 100 |
| | | 30 min | 100 | 100 | 100 |
| B) Comitrol Processor | i) Hot plate | <100 | 100 | 100 | 100 |
| | | <300 | 100 | 100 | 100 |
| | Never dried | | 100 | 100 | 100 |
| HPH C) 1 Pass | i) Hot plate | <100 | 100 | 67 | 50 |
| | | <300 | 100 | 100 | 100 |
| D) 2 Pass | i) Hot plate | <100 | 100 | 67 | 50 |
| | | <300 | 100 | 100 | 83 |
| | Never dried | | 100 | 100 | 83 |
| E) 6 Pass | i) Hot plate | <100 | 100 | 27 | 33 |
| | | <300 | 100 | 100 | 50 |
| | Never dried | | 87 | 83 | 67 |
| E) 6 Pass, <100 µm | i) Hot plate (UT) | 4 min | 100 | 67 | 50 |
| | | 30 min | 30 | 30 | 27 |
| Avicel CM 2159 | | | 95 | 0 | 0 |
| Novagel RC-15 | | | 96 | 0 | 0 |
| Novagel RC-10 | | | 96 | 0 | 0 |
| Bioplus Fibrils | UT 30 min | | 70 | 40 | 35 |
| CelluForce NCC | | | 100 | 100 | 100 |
| Arbocel B600 | | | 30 | 30 | 27 |
| Arbocel BE600/30 | | | 30 | 30 | 27 |

These results show that an extensive homogenization through High Pressure Homogenization and extensive grinding of dried material to a particle size < 100µm, reduces the stabilizing effect of BC:CMC. Treatment with UT of never dried BC:CMC processed with the Sammic blender, does not change its stabilizing effect on cocoa particles. However, under extreme processing conditions such as HPH 6 passages, drying and comminution to <100 µm, UT treatment affects the cocoa stability achieved with the BC:CMC.

To the exception of Celluforce, all colloidal plant celluloses and nanocelluloses showed a very low stabilizing effect on cocoa particles.

References

1. Jonas, R. and L.F. Farah, Production and application of microbial cellulose. Polymer Degradation and Stability, 1998. 59(1-3): p. 101-106.

2. Klemm, D., et al., Bacterial synthesized cellulose - artificial blood vessels for microsurgery. Progress in Polymer Science, 2001. 26(9): p. 1561-1603.

3. Lin, P., et al., Improving biocompatibility by surface modification techniques on implantable bioelectronics. Biosensors and Bioelectronics, 2013. 47(0): p. 451-460.

4. Oliveira, R.L., et al., Synthesis and characterization of microcrystalline cellulose produced from bacterial cellulose. Journal of Thermal Analysis and Calorimetry, 2011. 106(3): p. 703-709.

5. Wanichapichart, P., et al., Characterization of cellulose membranes produced by Acetobacter xyllinum. Songklanakarin Journal of Science and Technology, 2002. 24((Suppl.) Membrane Sci. &Tech.): p. 855-862.

6. Valla, S., et al., Bacterial Cellulose Production: Biosynthesis and Applications, in Microbial Production of Biopolymers and Polymer Precursors: Applications and Perspectives, B.H.A. Rehm, Editor. 2009, Caister Academic Press: U.K. p. 43-78.

7. Andrade, F.K., et al., Bacterial cellulose: Properties, production and applications, in Cellulose: Structure and Properties, Derivatives and Industrial Uses, A. Lejeune and T. Deprez, Editors. 2010, Nova Science Publishers Inc.: New York. p. 427-458.

8. Brown, R.M., Jr., J.H. Willison, and C.L. Richardson, Cellulose biosynthesis in Acetobacter xylinum: visualization of the site of synthesis and direct measurement of the in vivo process. Proceedings of the National Academy of Sciences (USA), 1976. 73(12): p. 4565-4569.

9. Saxera, I.M. and R.M. Brown, Biosynthesis of Bacterial Cellulose, in Bacterial NanoCellulose: A Sophisticated Multifunctional Material, F.M. Gama, P. Gatenholm, and D. Klemm, Editors. 2013, CRC Press: Boca Raton. p. 1-18.

10. George, J., et al., Characterization of chemically treated bacterial (Acetobacter xylinum) biopolymer: Some thermomechanical properties. International Journal of Biological Macromolecules, 2005. 37(4): p. 189-194.

11. George, J., et al., Physico-Mechanical Properties of Chemically Treated Bacterial (Acetobacter xylinum) Cellulose Membrane. World Journal of Microbiology and Biotechnology, 2005. 21(8-9): p. 1323-1327.

12. Klemm, D., et al., Cellulose: Fascinating Biopolymer and Sustainable Raw Material. Angewandte Chemie International Edition, 2005. 44(22): p. 3358-3393.

13. Nakagaito, A.N., S. Iwamoto, and H. Yano, Bacterial cellulose: the ultimate nano-scalar cellulose morphology for the production of high-strength composites. Applied Physics A, 2004. 80(1): p. 93-97.

14. Bäckdahl, H., et al., Mechanical properties of bacterial cellulose and interactions with smooth muscle cells. Biomaterials, 2006. 27(9): p. 2141-2149.

15. Iguchi, M., S. Yamanaka, and A. Budhiono, Bacterial cellulose-a masterpiece of nature's arts. Journal of Materials Science, 2000. 35(2): p. 261-270.

16. Chávez-Pacheco, J.L., et al., Partial bioenergetic characterization of Gluconacetobacter xylinum cells released from cellulose pellicles by a novel methodology. Journal of Applied Microbiology, 2005. 99(5): p. 1130-1140.

17. Gayathry, G. and G. Gopalaswamy, Production and characterisation of microbial cellulosic fibre from Acetobacter xylinum. Indian Journal of Fibre & Textile Research, 2014. 39(1): p. 93-96.

18. Brown Jr, R.M. and C. Lin Fong, Multiribbon Microbial Cellulose. 1990, Board of Regents, The University of Texas System, Austin, Texas: US.

19. Clasen, C., et al., Effects of Different Drying Processes on the Material Properties of Bacterial Cellulose Membranes. Macromolecular Symposia, 2006. 244(1): p. 48-58.

20. Stephens, R.S., A. Westland John, and N. Neogi Amar, Method of using bacterial cellulose as a dietary fiber component. 1990, Weyerhaeuser Company, Federal Way, Washington: US. p. 7.

21. Tammarate, P., Processes for the modification and utilization of bacterial cellulose. 1999, The Thailand Research Fund. p. 7.

22. Morinaga, Y., et al., 微小繊維状セルロースの乾燥方法および乾燥物 (Method for drying fine fibrous cellulose and dried material). 1997, Bio Polymer Res:Kk 株式会社バイオポリマー・リサーチ p. 20.

23. Nishimura, N., et al., Method for restoring dried cellulose. 1997, Biopolymer Research Inc. p. 7.

24. Watanabe, K., et al., Method for processing bacterial cellulose. 2000, Bio-Polymer Research Co., Ltd. p. 10.

25. Yang, Z.F., et al., Bacterial cellulose-containing formulations lacking a carboxymethyl cellulose component. 2010, Yang, Z.F., Raczkjowski, R., Rubic, L.B., Mazyck, M.J., Deely, K.M. p. 8.

26. Yang, Z.-F., et al., Bacterial cellulose-containing formulations. 2011, CP Kelco U.S., Inc., Atlanta, GA (US): US.

27. Yang, Z.F., et al., Process for drying reticulated bacterial cellulose without co-agents. 2001, Pharmacia Corporation. p. 29.

28. Tahara, N., et al., Bacterial cellulose concentrate and method for treating said concentrate. 2000, Original Assignee Bio-Polymer Research Co., Ltd.. p. 8.

**Claims**

1. A powdered formulation, comprising

   bacterial cellulose;
   and an additional component selected from the following list: carboxymethyl cellulose, xanthan, methylcellulose, hydroxyethyl-cellulose, hydroxypropyl methylcellulose, tylose, or mixture thereof;
   wherein the powdered formulation has a particle size between 5-500 $\mu$m, with methods of particle size determination as disclosed in the description;
   wherein the mass ratio between bacterial cellulose and the additional component varies between 1:5 to 1:0.2, preferably 1:2 to 1:0.5;
   wherein the powdered formulation is dispersible in an aqueous media, at 20 °C, with low shear mixing.

2. The powdered formulation according to the previous claim, wherein the low shear mixing is at most 1500 rpm, preferably at most 1000 rpm.

3. The powdered formulation according to any of the previous claims, wherein the powdered formulation is dispersed in an aqueous media in at most 10 min; preferably in at most 6 min; more preferably in at most 4 min, even more preferably in at most 2 min; most preferably in at most 1 min.

4. The powdered formulation according to any of the previous claims, wherein the particles comprise a size between 80-400 $\mu$m, more preferably 100-300 $\mu$m.

5. The powdered formulation according to claim 4, wherein the D50 of the particle is 50-300 $\mu$m, preferably the D50 of the particle is 80-250 $\mu$m, more preferably the D50 of the particle is 100-200 $\mu$m.

6. The powdered formulation according to the previous claim 4, wherein the D50 of the particle is 10-90 $\mu$m, preferably the D50 of the particle is 20-80 $\mu$m, more preferably the D50 of the particle is 30-60 $\mu$m.

7. The powdered formulation according to the previous claim 4, wherein the bacterial cellulose is dispersed in an aqueous media in at most 2 min and wherein the particles comprise a size between 5-100 $\mu$m; more preferably 10-60 $\mu$m.

8. The powdered formulation according to any of the previous claims, wherein the additional component is carboxymethyl cellulose, carboxymethyl cellulose and xanthan; carboxymethyl cellulose and hydroxyethyl-cellulose and carboxymethyl cellulose and hydroxypropyl methylcellulose, or mixture thereof.

9. The powdered formulation according to any of the previous claims, wherein the powdered bacterial cellulose is obtained from a bacterium of the following list: *Acetobacter, Agrobacterium, Gluconacetobacter, Achromobacter, Alcaligenes, Aerobacter, Azotobacter, Rhizobium, Salmonella, Escherichia, Sarcina, Komagataeibacter,* or combinations thereof, preferably the powdered bacterial cellulose is obtained from a bacterium of the following list: *Acetobacter, Komagataeibacter, Gluconacetobacter* or combinations thereof.

10. Use of the powdered bacterial cellulose formulation described in any of the previous claims as a colloid stabilizer, foam stabilizer or as a thickener.

11. A method for producing a bacterial cellulose powdered formulation described in any of the previous claims 1-9 comprising the following steps of:

    providing an aqueous suspension of ground bacterial cellulose bundles, with a size between 20 $\mu$m to 2 mm, preferably 100 $\mu$m to 1.5 mm, more preferably 200 $\mu$m to 1 mm;
    adding an additional component at a temperature between 20-80°C, wherein the additional component is selected from carboxymethyl cellulose, xanthan, methylcellulose, hydroxyethyl-cellulose, hydroxypropyl methylcellulose, tylose, or mixture thereof;
drying the bacterial cellulose until obtaining at least 60% of solids;
grinding the bacterial cellulose until obtain a particle size between 5-500 $\mu$m; wherein the mass ratio between bacterial cellulose and the additional component varies between 1:5 to 1:0.2, preferably 1:2 to 1:0,5, wherein the particle size is determined by the methods of the description

**Patentansprüche**

1. Eine pulverförmige Formulierung, umfassend

   bakterielle Cellulose;
   und eine zusätzliche Komponente, ausgewählt aus der folgenden Liste: Carboxymethylcellulose, Xanthan, Methylcellulose, Hydroxyethylcellulose, Hydroxypropylmethylcellulose, Tylose oder Mischungen davon;
   wobei die pulverförmige Formulierung eine Partikelgröße zwischen 5-500 $\mu$m aufweist, mit Verfahren zur Bestimmung der Partikelgröße wie in der Beschreibung offenbart;
   wobei das Massenverhältnis zwischen der bakteriellen Cellulose und der zusätzlichen Komponente zwischen 1:5 und 1:0,2, bevorzugt 1:2 und 1:0,5 liegt;
   wobei die pulverförmige Formulierung in einem wässrigen Medium bei 20 °C scherkraftarm dispergierbar ist.

2. Die pulverförmige Formulierung nach dem vorangehenden Anspruch, wobei das Mischen scherkraftarm mit höchstens 1500 U/min, bevorzugt mit höchstens 1000 U/min erfolgt.

3. Die pulverförmige Formulierung nach einem der vorangehenden Ansprüche, wobei die pulverförmige Formulierung in einem wässrigen Medium höchstens 10 Min., bevorzugt höchstens 6 Min., besonders bevorzugt höchstens 4 Min., ganz besonders bevorzugt höchstens 2 Min., am meisten bevorzugt höchstens 1 Min. dispergiert wird.

4. Die pulverförmige Formulierung nach einem der vorangehenden Ansprüche, wobei die Partikel eine Größe zwischen 80-400 $\mu$m, besonders bevorzugt 100-300 $\mu$m aufweisen.

5. Die pulverförmige Formulierung nach Anspruch 4, wobei der D50 des Partikels 50-300 $\mu$m, der D50 des Partikels bevorzugt 80-250 $\mu$m, der D50 des Partikels besonders bevorzugt 100-200 $\mu$m beträgt.

6. Die pulverförmige Formulierung nach dem vorangehenden Anspruch 4, wobei der D50 des Partikels 10-90 $\mu$m, der D50 des Partikels bevorzugt 20-80 $\mu$m, der D50 des Partikels besonders bevorzugt 30-60 $\mu$m beträgt.

7. Die pulverförmige Formulierung nach dem vorangehenden Anspruch 4, wobei die bakterielle Cellulose höchstens 2 Minuten in einem wässrigen Medium dispergiert wird und wobei die Partikel eine Größe zwischen 5-100 $\mu$m, besonders bevorzugt 10-60 $\mu$m, umfassen.

8. Die pulverförmige Formulierung nach einem der vorangehenden Ansprüche, wobei die zusätzliche Komponente Carboxymethylcellulose, Carboxymethylcellulose und Xanthan; Carboxymethylcellulose und Hydroxyethylcellulose und Carboxymethylcellulose und Hydroxypropylmethylcellulose oder Mischungen davon ist.

9. Die pulverförmige Formulierung nach einem der vorangehenden Ansprüche, wobei die pulverförmige bakterielle Cellulose aus einem Bakterium der folgenden Liste gewonnen wird: *Acetobacter, Agrobacterium, Gluconacetobacter, Achromobacter, Alcaligenes, Aerobacter, Azotobacter, Rhizobium, Salmonella, Escherichia, Sarcina, Komagataeibacter,* oder Kombinationen davon, die pulverförmige bakteriellen Cellulose bevorzugt aus einem Bakterium der folgenden Liste gewonnen wird: *Acetobacter, Komagataeibacter, Gluconacetobacter* oder Kombinationen davon.

10. Verwendung der in einem der vorangehenden Ansprüche beschriebenen pulverförmigen Formulierung aus bakterieller Cellulose als kolloidaler Stabilisator, Schaumstabilisator oder als Verdickungsmittel.

11. Ein Verfahren zur Herstellung einer pulverförmigen Formulierung aus bakterieller Cellulose nach einem der vorangehenden Ansprüche 1-9, umfassend die folgenden Schritte:

    Bereitstellen einer wässrigen Suspension aus gemahlenen bakteriellen Cellulosebündeln mit einer Größe zwischen 20 $\mu$m und 2 mm, bevorzugt 100 $\mu$m und 1,5 mm, besonders bevorzugt 200 $\mu$m und 1 mm;

Hinzufügen einer zusätzlichen Komponente bei einer Temperatur zwischen 20-80 °C, wobei die zusätzliche Komponente ausgewählt ist aus Carboxymethylcellulose, Xanthan, Methylcellulose, Hydroxyethylcellulose, Hydroxypropylmethylcellulose, Tylose oder Mischungen davon;

Trocknen der bakteriellen Cellulose bis zum Erhalt von mindestens 60% Feststoffen;

Mahlen der bakteriellen Cellulose, bis eine Partikelgröße zwischen 5-500 $\mu$m erreicht ist; wobei das Massenverhältnis zwischen bakterieller Cellulose und der zusätzlichen Komponente zwischen 1:5 und 1:0,2, bevorzugt zwischen 1:2 und 1:0,5, variiert,

wobei die Partikelgröße nach den Verfahren der Beschreibung bestimmt wird.

## Revendications

1. Une formulation en poudre, comprenant

   de la cellulose bactérienne ;
   et un composant supplémentaire choisi parmi la liste suivante : carboxyméthylcellulose, xanthane, méthylcellulose, hydroxyéthylcellulose, hydroxypropylméthylcellulose, tylose, ou un mélange de ceux-ci ;
   dans laquelle la formulation en poudre a une taille de particule située entre 5-500 $\mu$m, avec des procédés de détermination de taille de particule tels que divulgués dans la description ;
   dans laquelle le rapport de masse entre la cellulose bactérienne et le composant supplémentaire varie entre 1:5 et 1:0,2, préférablement entre 1:2 et 1:0,5 ;
   dans laquelle la formulation en poudre est dispersable dans un milieu aqueux, à 20 °C, par mélange à faible cisaillement.

2. La formulation en poudre selon la revendication précédente, dans laquelle le mélange à faible cisaillement se fait au maximum à 1500 T/min, préférablement au maximum à 1000 T/min.

3. La formulation en poudre selon l'une quelconque des revendications précédentes, dans laquelle la formulation en poudre est dispersée dans un milieu aqueux durant un maximum de 10 min ; préférablement durant un maximum de 6 min ; plus préférablement durant un maximum de 4 min, encore plus préférablement durant un maximum de 2 min ; le plus préférablement durant un maximum de 1 minute.

4. La formulation en poudre selon l'une quelconque des revendications précédentes, dans laquelle les particules ont une taille située entre 80-400 $\mu$m, plus préférablement entre 100-300 $\mu$m.

5. La formulation en poudre selon la revendication 4, dans laquelle le D50 de la particule est de 50-300 $\mu$m , préférablement le D50 de la particule est de 80-250 $\mu$m , plus préférablement le D50 de la particule est de 100-200 $\mu$m.

6. La formulation en poudre selon la revendication précédente 4, dans laquelle le D50 de la particule est de 10-90 $\mu$m , préférablement le D50 de la particule est de 20-80 $\mu$m, plus préférablement le D50 de la particule est de 30-60 $\mu$m.

7. La formulation en poudre selon la revendication précédente 4, dans laquelle la cellulose bactérienne est dispersée dans un milieu aqueux durant un maximum de 2 min et dans laquelle les particules ont une taille située entre 5-100 $\mu$m ; plus préférablement entre 10-60 $\mu$m.

8. La formulation en poudre selon l'une quelconque des revendications précédentes, dans laquelle le composant supplémentaire est du carboxyméthylcellulose, carboxyméthylcellulose et xanthane ; carboxyméthylcellulose et hydroxyéthylcellulose et carboxyméthylcellulose et hydroxypropylméthylcellulose, ou un mélange de ceux-ci.

9. La formulation en poudre selon l'une quelconque des revendications précédentes, dans laquelle la cellulose bactérienne en poudre est obtenue à partir d'une bactérie de la liste suivante : *Acetobacter, Agrobacterium, Gluconacetobacter, Achromobacter, Alcaligenes, Aerobacter, Azotobacter, Rhizobium, Salmonella, Escherichia, Sarcine, Komagataeibacter,* ou des combinaisons de celles-ci, la cellulose bactérienne en poudre étant préférablement obtenue à partir d'une bactérie de la liste suivante : *Acetobacter, Komagataeibacter, Gluconacetobacter* ou des combinaisons de celles-ci.

**10.** Utilisation de la formulation de cellulose bactérienne en poudre décrite dans l'une quelconque des revendications précédentes en tant que stabilisateur colloïde, stabilisateur de mousse, ou épaississant.

**11.** Un procédé pour la production d'une formulation de cellulose bactérienne en poudre décrite dans l'une quelconque des revendications précédentes 1-9 comprenant les étapes suivantes :

fournir une suspension aqueuse d'ensembles de cellulose bactérienne broyée, d'une taille située entre 20 μm et 2 mm, préférablement entre 100 μm et 1,5 mm, plus préférablement entre 200 μm et 1mm ;
ajouter un composant supplémentaire à une température située entre 20-80 °C, dans lequel le composant supplémentaire est choisi parmi du carboxyméthylcellulose, xanthane, méthylcellulose, hydroxyéthylcellulose, hydroxypropylméthylcellulose, tylose, ou un mélange de ceux-ci ;
sécher la cellulose bactérienne jusqu'à obtenir au moins 60% de solides ;
broyer la cellulose bactérienne jusqu'à obtenir une taille de particule située entre 5-500 μm ; dans laquelle le rapport de masse entre la cellulose bactérienne et le composant supplémentaire varie entre 1:5 et 1:0,2, préférablement entre 1:2 et 1:0,5,

dans laquelle la taille de particule est déterminée par les procédés de la description.

A) Sammic blender

B) Comitrol Processor

C1) HPH 1 passage

C2) HPH 2 Passages

C3) HPH 6 passages

**Fig. 1**

A) Sammic blender

B) Comitrol Processor

C1) HPH 1 Pass

C2) HPH 2 Pass

Fig. 2 - A

C3) HPH 6 Pass

**Fig. 2** - B

Fig. 3

700178, S-P

700178, Comitrol-P

700178, HPH 6 passage-P

Nata de coco, S-P

**Fig. 4**

Nata de coco, S

Nata de coco, S-P

700178, S-P (Figure 2 contains photographs of non-pressed samples)

700178, Comitrol-P (Figure 2 contains photographs of non-pressed samples)

Fig 5 - A

700178, HPH 6 Pass-P (**Error! Reference source not found.** 2 contains photographs of non-pressed samples)

**Fig. 5** - B

| Time<br>(min) | Control | Bacterial cellulose<br>0.2% | Xanthan<br>0.2% | Bioplus<br>0.2% |
|---|---|---|---|---|
| 0 | | | | |
| 30 | | | | |
| 60 | | | | |
| 90 | | | | |

| | | 0.1% | 0.2% | 0.3% |
|---|---|---|---|---|
| 90 | Bacterial cellulose | | | |

Fig. 6

Fig. 7

A)  Sammic blender     B)  Comitrol Processor          E)   HPH 6 Pass

II) Magnetic stirrer

I) UltraTurrax

Fig. 8

Fig. 9

Fig. 10

32

**Fig. 11**

100

83

50

0

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4960763 A
- US 5962676 A
- JP 2873927 B
- US 6153413 A
- US 20100016575 A1
- US 8053216 B2
- WO 2001005838 A1
- US 006069136 A

### Non-patent literature cited in the description

- **JONAS, R. ; L.F. FARAH.** Production and application of microbial cellulose. *Polymer Degradation and Stability,* 1998, vol. 59 (1-3), 101-106
- **KLEMM, D. et al.** Bacterial synthesized cellulose - artificial blood vessels for microsurgery. *Progress in Polymer Science,* 2001, vol. 26 (9), 1561-1603
- **LIN, P. et al.** Improving biocompatibility by surface modification techniques on implantable bioelectronics. *Biosensors and Bioelectronics,* 2013, vol. 47 (0), 451-460
- **OLIVEIRA, R.L et al.** Synthesis and characterization of microcrystalline cellulose produced from bacterial cellulose. *Journal of Thermal Analysis and Calorimetry,* 2011, vol. 106 (3), 703-709
- **WANICHAPICHART, P. et al.** Characterization of cellulose membranes produced by Acetobacter xyllinum. *Songklanakarin Journal of Science and Technology,* 2002, vol. 24, 855-862
- Bacterial Cellulose Production: Biosynthesis and Applications. **VALLA, S. et al.** Microbial Production of Biopolymers and Polymer Precursors: Applications and Perspectives. Caister Academic Press, 2009, 43-78
- Bacterial cellulose: Properties, production and applications. **ANDRADE, F.K. et al.** Cellulose: Structure and Properties, Derivatives and Industrial Uses. Nova Science Publishers Inc, 2010, 427-458
- **BROWN, R.M., JR. ; J.H. WILLISON ; C.L. RICHARDSON.** Cellulose biosynthesis in Acetobacter xylinum: visualization of the site of synthesis and direct measurement of the in vivo process. *Proceedings of the National Academy of Sciences (USA),* 1976, vol. 73 (12), 4565-4569
- Biosynthesis of Bacterial Cellulose. **SAXERA, I.M. ; R.M. BROWN.** Bacterial NanoCellulose: A Sophisticated Multifunctional Material,. CRC Press, 2013, 1-18
- **GEORGE, J. et al.** Characterization of chemically treated bacterial (Acetobacter xylinum) biopolymer: Some thermomechanical properties. *International Journal of Biological Macromolecules,* 2005, vol. 37 (4), 189-194
- **GEORGE, J. et al.** Physico-Mechanical Properties of Chemically Treated Bacterial (Acetobacter xylinum) Cellulose Membrane. *World Journal of Microbiology and Biotechnology,* 2005, vol. 21 (8-9), 1323-1327
- **KLEMM, D. et al.** Cellulose: Fascinating Biopolymer and Sustainable Raw Material. *Angewandte Chemie International Edition,* 2005, vol. 44 (22), 3358-3393
- **NAKAGAITO, A.N. ; S. IWAMOTO ; H. YANO.** Bacterial cellulose: the ultimate nano-scalar cellulose morphology for the production of high-strength composites. *Applied Physics A,* 2004, vol. 80 (1), 93-97
- **BÄCKDAHL, H. et al.** Mechanical properties of bacterial cellulose and interactions with smooth muscle cells. *Biomaterials,* 2006, vol. 27 (9), 2141-2149
- **IGUCHI, M. ; S. YAMANAKA ; A. BUDHIONO.** Bacterial cellulose-a masterpiece of nature's arts. *Journal of Materials Science,* 2000, vol. 35 (2), 261-270
- **CHÁVEZ-PACHECO, J.L. et al.** Partial bioenergetic characterization of Gluconacetobacter xylinum cells released from cellulose pellicles by a novel methodology. *Journal of Applied Microbiology,* 2005, vol. 99 (5), 1130-1140
- **GAYATHRY, G. ; G. GOPALASWAMY.** Production and characterisation of microbial cellulosic fibre from Acetobacter xylinum. *Indian Journal of Fibre & Textile Research,* 2014, vol. 39 (1), 93-96
- **BROWN JR, R.M. ; C. LIN FONG.** Multiribbon Microbial Cellulose. Board of Regents, The University of Texas System, 1990

- **CLASEN, C. et al.** Effects of Different Drying Processes on the Material Properties of Bacterial Cellulose Membranes. *Macromolecular Symposia,* 2006, vol. 244 (1), 48-58
- **STEPHENS, R.S. ; A. WESTLAND JOHN ; N. NEOGI AMAR.** Method of using bacterial cellulose as a dietary fiber component. Weyerhaeuser Company, 1990, 7
- **TAMMARATE, P.** Processes for the modification and utilization of bacterial cellulose. The Thailand Research Fund, 1999, 7
- **NISHIMURA, N. et al.** Method for restoring dried cellulose. Biopolymer Research Inc, 1997, 7
- **WATANABE, K. et al.** Method for processing bacterial cellulose. Bio-Polymer Research Co., Ltd, 2000, 10

- **YANG, Z.F. ; RACZKJOWSKI, R. ; RUBIC, L.B. ; MAZYCK, M.J. ; DEELY, K.M. et al.** *Bacterial cellulose-containing formulations lacking a carboxymethyl cellulose component.,* 2010, 8
- **YANG, Z.-F. et al.** Bacterial cellulose-containing formulations. CP Kelco U.S., Inc, 2011
- **YANG, Z.F. et al.** Process for drying reticulated bacterial cellulose without co-agents. Pharmacia Corporation, 2001, 29
- **TAHARA, N. et al.** Bacterial cellulose concentrate and method for treating said concentrate. Original Assignee Bio-Polymer Research Co., Ltd, 2000, 8